Europäisches Patentamt

European Patent Office

Office européen des brevets

(11) Numéro de publication: **0 315 515 B1**

# FASCICULE DE BREVET EUROPEEN

(45) Date de publication de fascicule du brevet: **21.10.92**    (51) Int. Cl.⁵: **G06K 7/016**, G06K 7/14

(21) Numéro de dépôt: **88402731.9**

(22) Date de dépôt: **28.10.88**

(54) **Procédé de lecture optique de codes à barres.**

(30) Priorité: **06.11.87 FR 8715403**

(43) Date de publication de la demande:
**10.05.89 Bulletin  89/19**

(45) Mention de la délivrance du brevet:
**21.10.92 Bulletin  92/43**

(84) Etats contractants désignés:
**DE ES GB IT NL**

(56) Documents cités:
**EP-A- 0 036 951
FR-A- 2 435 092
US-A- 4 675 909**

**IBM TECHNICAL DISCLOSURE BULLETIN, vol. 25, no. 11B, avril 1983, pages 6076-6077, New York, US; D.A. RAMSEY et al.: "Code recognition"**

(73) Titulaire: **SGS-THOMSON MICROELECTRO-NICS S.A.
7, Avenue Galliéni
F-94250 Gentilly(FR)**

(72) Inventeur: **Moreno, Rafael
CABINET BALLOT-SCHMIT 84, Avenue Kléber
F-75116 Paris(FR)**

(74) Mandataire: **Ballot, Paul Denis Jacques et al
Cabinet Ballot-Schmit, 7, rue le Sueur
F-75116 Paris(FR)**

## Description

L'invention concerne la lecture optique de marques d'indexation, et plus précisément de codes à barres apposés sur des étiquettes ou plus généralement sur des documents ou sur tout objet présentant une surface sensiblement plane.

Les marques d'indexation servent à la reconnaissance des objets pour faciliter leur gestion; elles sont couramment utilisées par exemple pour indiquer les références ou le prix de marchandises : plutôt que d'inscrire uniquement des références lisibles en clair par un observateur, on essaie d'apposer en plus (ou à la place) des codes facilement reconnaissables par des détecteurs optiques. L'automatisation de certaines opérations peut en être grandement facilitée; par exemple une caissière dans un magasin aura plus vite fait de passer un crayon optique sur une marque d'indexation apposée sur la marchandise que de lire le prix et la référence et les taper sur le clavier d'une caisse enregistreuse.

Les codes à barres sont des marques qui se prêtent particulièrement bien à une lecture optique automatisée. Ils sont constitués par des bâtonnets ou barres rectangulaires dont la largeur et/ou l'espacement servent à coder l'information utile. Par exemple, dans le cas très fréquent où cette information est une suite de chiffres décimaux, la marque correspondante sera constituée par une succession de bâtonnets parallèles les uns aux autres, ayant une largeur s.l où l est la largeur des bâtonnets les plus étroits et s est un nombre entier de quelques unités au plus, l'espacement des bâtonnets étant m.e où e est l'espace nominal le plus étroit entre bâtonnets et m un nombre entier de quelques unités.

Le code peut aussi se limiter à un espacement variable de bâtonnets de largeur constante ou au contraire à une largeur variable de bâtonnets espacés d'une distance constante.

Dans tous les cas, la lecture du code à barres passe par la reconnaissance de la présence de barres, même en présence de bruit, par exemple en présence de taches noires mélangées aux barres noires imprimées sur un fond blanc.

On ne s'intéressera pas dans la présente invention au décodage proprement dit (conversion des largeurs et/ou espacements en une suite de chiffres décimaux par exemple) mais seulement à la reconnaissance de la présence de barres.

L'exactitude de la reconnaissance est fonction de la qualité du marquage et du fond sur lequel il est apposé. Les bâtonnets doivent être imprimés de manière très nette, avec un fort contraste lumineux par rapport au fond. L'exactitude est aussi fonction de la qualité du détecteur optique utilisé.

La qualité du marquage doit être particulièrement soignée si le détecteur est de constitution sommaire. Certains détecteurs sont capables seulement de faire la différence entre des zones très absorbantes (encre très noire par exemple) et un fond très réfléchissant (fond de papier blanc par exemple), et encore à condition que la délimitation des zones soit très nette.

Dans certains cas, on est tellement peu certain de la qualité du fond sur lequel sont apposées les marques, parce que des inscriptions diverses ou des taches viennent se superposer au marquage d'indexation, que l'on utilise des encres spéciales ne réfléchissant qu'une seule longueur d'onde, et des détecteurs optiques travaillant sélectivement à cette longueur d'onde, ce qui complique la réalisation et accroît le coût des systèmes.

L'invention a pour but de proposer un procédé de lecture de codes à barres permettant de reconnaître et décoder des marques même lorsqu'elles sont imparfaites ou lorsqu'elles sont apposées sur les surfaces de qualité médiocre. Cela permet de simplifier les procédés de marquage en autorisant l'utilisation de simples imprimantes au lieu de procédés d'imprimerie coûteux.

Globalement, les procédés de lecture classiques de codes à barres consistent simplement à faire défiler à vitesse constante un détecteur optique devant le code (ou l'inverse), transversalement à la direction d'allongement des bâtonnets, à observer l'existence de pics successifs du signal de sortie du détecteur, ces pics correspondant à des maxima d'absorbtion, de transmission ou de réflexion de lumière, et à comparer ces pics à des seuils prédéterminés pour en déduire la présence ou l'absence de bâtonnets (puis leur largeur et leur espacement).

Le brevet EP A1 0036951 décrit un système de détection de pics successifs dans un signal video analogique. Le seuil de détection est dynamique, c'est-à-dire qu'il varie en fonction du niveau moyen de signal détecté. D'autre part, l'article de IBM TDB Vol 25 N° 11B Avril 1983 décrit un procédé de lecture avec comptage de pixels sous un détecteur matriciel. La densité globale de points dans une région est évaluée et comparée à une région voisine pour savoir si une des deux régions est une barre noire.

L'invention propose un procédé beaucoup plus sophistiqué permettant de tenir compte de détériorations du marquage telles que des coupures de barres, un mauvais contraste, des taches parasites, une impression irrégulière, etc.

Pour cela on propose, selon l'invention, d'effectuer la succession d'opérations de traitement suivante:

- a) fournir à l'aide d'un détecteur optique une représentation d'une zone contenant des barres d'un code à barres, sous forme d'une matrice de pixels dans laquelle chaque pixel représente un état logique binaire caractéristique d'un point de la zone;
- b) calculer le total Tj du nombre des pixels dans un premier état logique pour chaque colonne de la matrice, j étant l'indice de colonne de la matrice;
- c) établir une valeur SDA telle que les colonnes pour lesquelles Tj est inférieur à SDA ne soient pas considérées comme contenant probablement une barre du code à barre;
- d) déterminer, en faisant croître j, une succession d'abcisses de colonnes XA1, XA2,..., XAr, etc. pour lesquelles Tj franchit la valeur SDA dans un premier sens et une succession d'abcisses de colonnes XB1, XB2,..., XBr, etc. pour lesquelles Tj franchit la valeur SDA dans l'autre sens;
- e) délimiter dans la matrice de pixels, pour chaque indice r, un rectangle ayant pour côtés les colonnes d'abcisses XAr et XBr ou des colonnes immédiatement adjacentes;
- f) comparer, pour chaque rectangle, un paramètre de l'image globale représentée par les pixels d'un état logique déterminé contenus dans ce rectangle à un paramètre nominal théorique d'une barre de code à barres qui serait orientée essentiellement dans le sens des colonnes du rectangle;
- g) fournir un signal électrique binaire d'un premier état logique ou d'un second état logique en fonction du résultat de la comparaison, ce signal représentant la présence ou l'absence d'une barre.

L'invention consiste donc à éliminer certaines zones d'image du bloc traité, et à ne conserver que des blocs rectangulaires ayant une forte probabilité de contenir essentiellement une barre de code à barres; cette probabilité est déterminée à partir du comptage en colonne des pixels du bloc; puis on effectue une certaine reconnaissance de forme sur les blocs rectangulaires sélectionnés, en ne tenant plus aucun compte des autres blocs. La reconnaissance s'effectue par comparaison de l'image stockée dans chaque bloc avec une image théorique de bâtonnet dans l'application considérée; un paramètre de la comparaison peut être la surface noire contenue dans le bloc rectangulaire; ce peut être aussi la hauteur, la position d'un centre de gravité ou barycentre de l'image; ce peut être aussi une combinaison de ces différents paramètres : on établit un coefficient de ressemblance entre l'image réelle dans un bloc et une image théorique, ce coefficient étant une fonction de plusieurs paramètres, et le signal de reconnaissance est établi par comparaison du coefficient de ressemblance avec une valeur minimale choisie.

Selon une caractéristique importante de l'invention, la valeur SDA qui sert à déterminer les limites des blocs à conserver pourra être déterminée par une succession d'opérations récurrentes qui sont les suivantes :

- c1) on choisit un premier nombre entier SD au moins égal à 1;
- c2) en faisant croître j, on détermine une succession de valeurs XA1, XA2,..., XAr, etc., de j pour lesquelles Tj franchit le seuil SD dans un premier sens et une succession de valeurs XB1, XB2,..., XBr, etc., pour lesquelles Tj franchit le seuil dans l'autre sens;
- c3) pour chacun des couples XAr, XBr, on calcule une valeur qui est le rapport entre la quantité (XBr-XAr).SD et la quantité qui est la sommation de [Tj - SD] pour j variant de XAr à XBr;
- c4) on compare ce rapport à un rapport minimal choisi;
- c5) on incrémente SD d'une unité si l'un des rapports est inférieur au rapport minimal choisi, et on recommence les étapes c2 à c5;
- c6) on arrête l'incrémentation si les rapports calculés pour chacun des couples XAr, XBr dépassent tous le rapport minimal; on mémorise les indices XAr, XBr correspondant au dernier calcul effectué, et la valeur SDA est la dernière valeur de SD utilisée dans ce calcul récurrent.

Selon encore une autre caractéristique importante de l'invention, la valeur initiale de SD choisie pour commencer le calcul récurrent est obtenue par

- calcul du nombre total de pixels dans le premier état logique binaire pour toute la matrice,
- calcul du rapport entre ce nombre et le nombre de pixels existant dans une colonne de la matrice,
- multiplication de ce rapport par un coefficient, et choix d'un nombre entier proche du résultat pour obtenir la valeur initiale de SD.

Ce calcul de la valeur initiale de SD a tout simplement pour but de réduire le nombre d'opérations récurrentes pour l'établissement de la valeur de SDA; mais on pourrait très bien commencer avec SD = 1. Le calcul ci-dessus permet d'établir une valeur initiale de SD qui est liée à la plus ou moins grande densité de pixels dans un état logique donné; autrement dit, on se fixera une valeur initiale de SD d'autant plus élevée qu'il y aura plus de pixels "noirs" (pour des barres noires sur fond blanc) dans la matrice étudiée.

En ce qui concerne la détermination des couples XAr, XBr pour lesquels la somme de pixels Tj, calculée colonne par colonne, franchit le seuil SD dans un sens puis dans un autre, la solution préférée selon l'invention est la suivante:

- XAr est la valeur de j pour laquelle, en faisant croître j, Tj devient supérieur ou égal à SD alors que Tj était précédemment (pour j = XAr-1) strictement inférieur à SD;

- XBr est la première valeur de j pour laquelle, en faisant croître j depuis XAr, Tj est encore supérieur ou égal à SD, alors que pour la colonne suivante (j = XBr + 1), Tj redevient strictement inférieur à SD.

Mais on pourrait prévoir des variantes de détermination de XAr et XBr sans sortir du cadre de l'invention; par exemple XAr peut être une valeur pour laquelle Tj devient strictement supérieur à SD; ou une valeur de l'abcisse de la colonne qui précède immédiatement la colonne pour laquelle Tj devient supérieur ou égal à SD. De même, XBr peut être la première valeur de j pour laquelle Tj redevient strictement inférieur à SD, ou pour laquelle Tj redevient inférieur ou égal à SD.

Ces variantes ont une incidence sur le choix des seuils de décision pour le calcul de SDA notamment; dans une formulation générique, on considèrera que l'expression "Tj franchit le seuil SD", soit dans un sens soit dans l'autre, recouvre ces différentes variantes.

D'autres caractéristiques et avantages de l'invention apparaîtront à la lecture de la description détaillée qui suit et qui est faite en référence aux dessins annexés dans lesquels:

- la figure 1 représente schématiquement un dispositif de lecture de marques d'indexation sous forme de codes à barres;
- la figure 2 représente une image digitalisée, sous forme d'une matrice de pixels binaires, d'une zone contenant des surfaces noires susceptibles d'être des barres de code à barres, ainsi qu'une courbe Tj = f(j) représentant la somme de pixels noirs de chaque colonne j de la matrice de la figure 1; cette figure représente aussi des surfaces hachurées au dessus et au dessous d'un seuil SD;
- la figure 3 représente la courbe Tj = f(j) avec des surfaces hachurées au dessus et au dessous d'un autre seuil SD1;
- la figure 4 représente la courbe Tj = f(j) avec des surfaces hachurées au dessus et au dessous d'un autre seuil SD2;
- la figure 5 représente la matrice image de la figure 2, après élimination de certaines portions non susceptibles de contenir des barres de codes à barres.

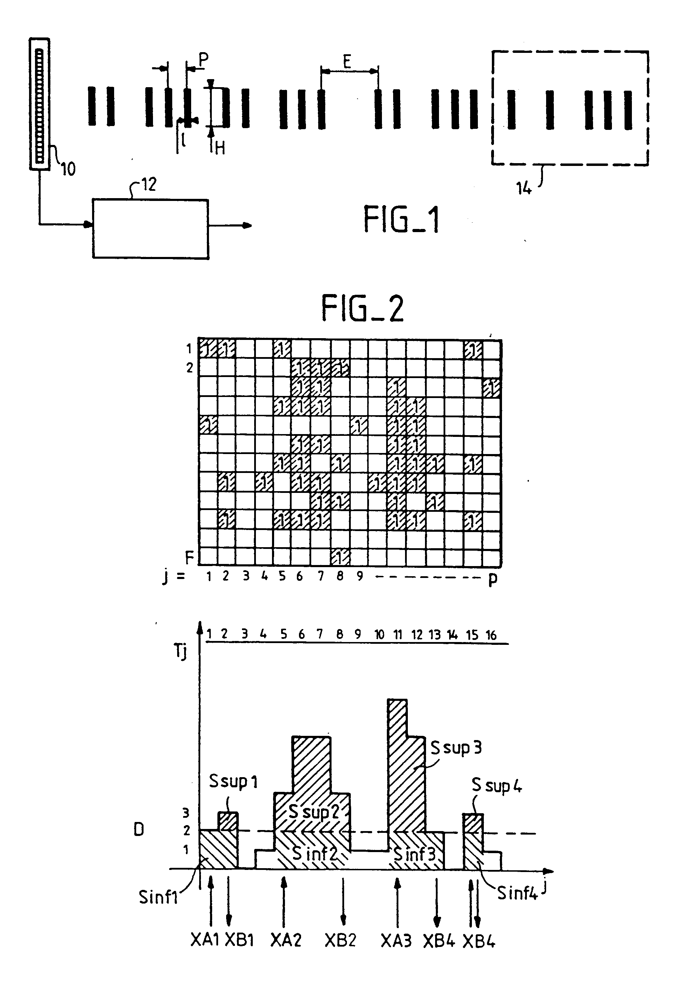

A la figure 1, on a représenté un exemple simple de code à barres imprimé sur une feuille; les barres sont des bâtonnets rectangulaires de hauteur nominale H, de largeur nominale l, et de pas d'espacement nominal P. Le code est défini par l'espacement réel E entre axes de bâtonnets adjacents, cet espacement étant un multiple entier du pas P, aux tolérances de positionnement près. Par conséquent, le principe de base de la lecture consiste à déterminer s'il y a ou non un bâtonnet aux différents emplacements possibles, ces emplacements étant espacés les uns des autres de la distance P.

Un détecteur optique 10, constitué de préférence par une barette linéaire de photodiodes, est mis en mouvement uniforme devant la surface portant le code à barres.

Dans la technique antérieure, on se contentait d'observer des pics d'absorbtion (pour des bâtonnets noirs sur fond blanc), ou des pics de réflexion (pour des bâtonnets réfléchissants sur fond peu réfléchissant) et d'en déduire la présence ou l'absence de bâtonnets selon que le pic dépassait ou non un seuil déterminé.

Dans la présente invention, on va former une image matricielle de la surface (ou d'une portion de surface) portant les marques, faire subir un traitement de signal particulier à cette image matricielle pour délimiter des zones de probabilité forte de présence d'un bâtonnet, puis comparer l'image contenue dans ces zones à une image-type de bâtonnet.

Le circuit de traitement et de reconnaissance est schématisé par un bloc 12 sur la figure 1.

L'image matricielle d'une zone de surface 14 est fournie par le détecteur optique 10 qui peut être une caméra à photosenseur linéaire ou matriciel. S'il à'git d'un photosenseur linéaire, l'image de la zone 14 sera fournie au fur et à mesure du déplacement du détecteur le long de la zone 14.

L'image de chaque point est convertie en un pixel ou bit d'information 0 ou 1 représentant le fait que la surface de ce point est plutôt réfléchissante ou plutôt absorbante. Les points examinés sur la surface 14 sont plus ou moins rapprochés les uns des autres selon la résolution du détecteur optique. La résolution dans le sens vertical n'est pas forcément la même que dans le sens horizontal; ici, on préfèrera une résolution plus élevée dans le sens horizontal, c'est-à-dire transversalement aux barres.

L'image globale de la zone 14 est stockée dans une mémoire matricielle de n lignes et p colonnes. On peut effectuer aussi le stockage d'une image de toute la surface marquée et le traitement de cette image complète, mais la subdivision en plusieurs zones 14 examinées successivement permet d'accélérer le traitement de l'image.

La première phase, phase I, de traitement de signal consiste à segmenter l'image en zones significatives ayant une forte probabilité de contenir un bâtonnet. Cette phase a pour but notamment d'éliminer une grande partie des zones présentant des tâches indésirables qui perturbent l'image et qui ne peuvent pas être considérées comme des bâtonnets. La phase I sera suivie d'une phase de reconnaissance de formes.

La phase I se déroule en deux étapes successives A et B, la première n'étant pas toujours nécessaire mais ayant pour but de réduire le nombre de calculs de l'étape suivante B.

La première étape A consiste à déterminer un seuil de départ de l'analyse qui sera faite à la deuxième étape B. On reviendra sur cette étape A après avoir décrit le détail de l'étape B car il est difficile de comprendre la signification de l'étape A sans savoir ce qu'est l'étape B.

L'étape B consiste d'abord à calculer, pour chacune des p colonnes de la matrice, le total des pixels dans un premier état binaire contenus dans cette colonne. Dans la suite on considèrera, à titre d'exemple seulement, que l'on compte les pixels à l'état haut (état 1) et que ces pixels représentent des points noirs de l'image.

Sur la figure 2 on a représenté un exemple de bloc matriciel avec une image de points noirs (pixels à l'état 1) stockée dans cette matrice. Les pixels noirs sont hachurés et le chiffre 1 est inscrit dans le carré correspondant à ce pixel. Les points blancs ne comportent ni hachures ni inscription.

On calcule donc, si $x(i,j)$ est la valeur du pixel à l'intersection de la ligne i et de la colonne j, la somme $T_j$ (pour chaque colonne j) des $x(i,j)$ pour i variant de 1 à n.

On aboutit à une représentation de $T_j$ comme fonction de j; cette représentation est dessinée à la figure 2 en dessous des colonnes de la matrice pour qu'on voie bien la correspondance entre une colonne j et le total des pixels noirs qu'elle contient.

On stocke en mémoire les valeurs de $T_j$, avec une correspondance entre chaque numéro de colonne j et la valeur $T_j$ de la somme des pixels noirs de cette colonne.

On effectue ensuite une suite d'étapes de calcul récurrentes qui se déroulent de la manière suivante:

- on se fixe une valeur initiale de départ SD pour $T_j$; c'est le but de l'étape A mentionnée ci-dessus que de déterminer cette valeur SD et on y reviendra plus tard; pour le moment on admettra que SD est un nombre entier relativement bas, supérieur à 1; sur la figure 2, on a choisi $SD = 2$ pour une courbe dans laquelle $T_j$ varie de 0 à 9;
- on fait croître j de 1 à p et on détermine
  a) une succession de valeurs XA1, XA2, ..., XAr, etc. pour lesquelles $T_j$ franchit le seuil SD dans un premier sens, par exemple dans le sens croissant; sur la figure 2, on a repéré ainsi quatre colonnes XA1, XA2, XA3, XA4, pour lesquelles $T_j$ devient supérieur ou égal à SD par valeur croissante dans le sens des j croissants;
  b) une succession de valeurs XB1, XB2, ..., XBr, etc. pour lesquelles $T_j$ franchit le seuil SD dans l'autre sens; sur la figure 2, on a repéré quatre valeurs XB1, XB2, XB3, XB4 pour lesquelles $T_j$ est encore supérieur ou égal à SD mais sera strictement inférieur à SD à la colonne suivante dans le sens des j croissants;
- on calcule alors, pour chacun des couples XAr, XBr, un rapport qui est le rapport entre deux surfaces de la courbe $T_j$ en fonction de j; sur la figure 2, on a représenté ces deux surfaces sous formes de zones hachurées dans des sens différents; la première surface, appelée Sinf1 pour le premier couple XA1, XB1, Sinf2 pour le couple XA2, XB2, etc., est la surface délimitée par la courbe $T_j$, entre les abscisses définies par le couple considéré, au dessous du seuil SD. La deuxième surface, appelée Ssup1 pour le premier couple XA1, XB1, appelée Ssup2 pour le couple XA2, XB2, etc., est la surface délimitée par la courbe $T_j$, entre les abscisses définies par le couple considéré, au dessus du seuil SD. Les surfaces Sinf s'expriment sous la forme $(XBr - XAr) \cdot SD$; les surfaces Ssup s'expriment comme la somme de $(T_j - SD)$ pour j variant de XAr à XBr;
- on compare les rapports des surfaces inférieures et supérieures pour chacun des couples à une valeur choisie;
- si le rapport est inférieur à la valeur choisie pour au moins un couple XAr, XBr, on incrémente la valeur SD d'une unité et on recommence les opérations de calcul de rapports; si le rapport est supérieur à la valeur choisie pour tous les couples, on stocke en mémoire les dernières valeurs de XAr et XBr pour lesquelles le calcul a été effectué; ce sont ces valeurs qui vont être utilisées pour définir des zones de probabilité forte de présence de bâtonnet.

On va décrire pas à pas le calcul récurrent effectué sur la matrice de points et la courbe de la figure 2, avec les valeurs numériques données sur le dessin. Bien entendu cet exemple n'est donné qu'à titre indicatif pour mieux faire comprendre l'invention.

## 1. Première étape du calcul récurrent

On part de $SD = 2$; dès la première colonne $(XA1 = 1)$ la somme de pixels noirs est supérieure à 2; puis elle passe à 3 à la colonne suivante et cette colonne $(XB1 = 2)$ est la dernière colonne avant que la somme ne redescende strictement au dessous de 2; les autres couples de colonnes pour lesquels le seuil SD est franchi sont les suivants:

XA2 = 5 pour laquelle Tj passe à 4

XB2 = 8 pour laquelle Tj est égal à 4 avant de redescendre à 1

XA3 = 11 pour laquelle Tj passe à 9

XB3 = 13 pour laquelle Tj est encore égal à 2 avant de redescendre à 0

XA4 = 15 pour laquelle Tj passe à 3

XB4 = 15 (c'est la même colonne que XA4) puisque dès la 16ème colonne Tj redescend à 1.

On calcule alors les différentes surfaces inférieures et supérieures au dessous et au dessus de la ligne définie par SD = 2

Sinf1 = 4 entre les colonnes XA1 et XB1 au dessous de SD = 2.

Ssup1 = 1 " " " " " " au dessus de SD = 2.

leur rapport R1 = Sinf1/Ssup1 est égal à 4

Sinf2 = 8 entre les colonnes XA2 et XB2 au dessous de SD = 2

Ssup2 = 14 " " " " " " au dessus de SD = 2

R2 = Sinf2/Ssup2 = 0,57

Sinf3 = 6

Ssup3 = 12

R3 = 0,5

Sinf4 = 2

Ssup4 = 1

R4 = 2

Les rapports de surface s'échelonnent entre 0,5 et 4. On va considèrer que le seuil d'arrêt des calculs est de 1 dans cet exemple. Manifestement certains des rapports sont inférieurs à 1.. On en conclut qu'il faut incrémenter SD d'une unité et reprendre les déterminations des couples de colonnes XAr, XBr, pour lesquels Tj franchit le nouveau seuil SD1 = 3.

## 2. Deuxième étape du calcul récurrent

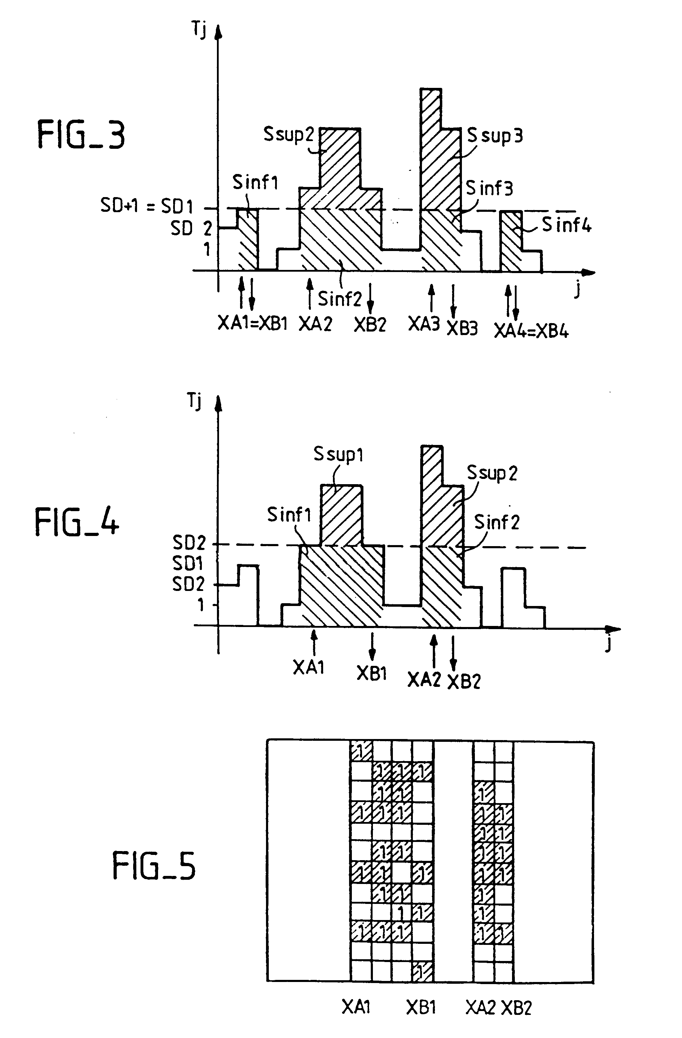

On a représenté sur la figure 3 la courbe Tj en fonction de j avec le nouveau seuil SD1 = 3, les nouveaux couples de colonnes pour lesquelles Tj franchit le nouveau seuil et les nouvelles surfaces hachurées inférieures et supérieures qui en résultent et qui ont la même définition que précédemment.

Dans l'exemple étudié numériquement ici, on trouve les nouveaux couples de colonnes suivants:

| XA1 = 2 | XA2 = 5 | XA3 = 11 | XA4 = 15 |
|---------|---------|----------|----------|
| XB1 = 2 | XB2 = 8 | XB3 = 12 | XB4 = 15 |

et les surfaces inférieures et supérieures suivantes:

| Sinf1 = 3 | Sinf2 = 12 | Sinf3 = 6 | Sinf4 = 3 |
|-----------|------------|-----------|-----------|
| Ssup1 = 0 | Ssup2 = 10 | Ssup3 = 10 | Ssup4 = 0 |

donc les rapports :

| R1 infini, | R2 = 1,2 | R3 = 0,6 | R4 = infini |
|------------|----------|----------|-------------|

Si on compare ces rapports au seuil choisi, ici l'unité, on voit qu'un seul rapport reste inférieur à ce seuil; il faut donc recommencer le calcul en incrémentant d'une unité le seuil SD1 qui devient maintenant SD2 = 4.

## 3. Troisième étape du calcul récurrent

La figure 4 représente à nouveau la fonction Tj de la somme des pixels noirs de la matrice considérée à titre d'exemple; le seuil SD2 = 4 permet de définir de nouvelles abscisses XAr de colonnes pour lesquelles Tj franchit le seuil SD2 dans le sens croissant (dans le sens des j croissants) et de nouvelles abscisses XBr pour lesquelles, toujours dans le sens des j croissants, Tj franchit à nouveau le seuil SD2, cette fois dans le sens décroissant; là encore, plus précisément, les abscisses XBr sont définies comme la dernière colonne pour laquelle Tj est supérieur ou égal à SD2 avant de redescendre strictement au dessous.

On trouve les nouveaux couples de colonnes ci-dessous :

| XA1 = 5 | XA2 = 11 |
|---------|----------|
| XB1 = 8 | XB2 = 12 |
| Sinf1 = 16 | Sinf2 = 8 |
| Ssup2 = 6 | Ssup2 = 8 |
| R1 = 2,67 | R2 = 1 |

Tous les rapports de surface sont maintenant supérieurs ou égaux à 1, c'est-à-dire à la valeur qu'on s'est fixée pour terminer le calcul récurrent.

On arrête donc l'incrémentation de SD et la dernière valeur SD2 représente la valeur SDA telle que les colonnes pour lesquelles Tj est inférieur à SDA ne sont pas considérées comme des colonnes contenant probablement une barre d'un code à barres.

On mémorise alors les derniers couples d'abscisses XAr, XBr pour lesquels le calcul récurrent a été effectué, c'est-à-dire pour lesquelles Tj franchit le seuil SDA dans un sens puis dans l'autre.

On élimine alors de la matrice de pixels de la figure 2 les colonnes pour lesquelles Tj est inférieur à SDA; cela revient à délimiter des blocs de pixels constitués chacun de plusiers colonnes adjacentes de la matrice, chacun des blocs étant susceptible de contenir une barre d'un code à barres.

Chaque bloc est délimité d'un côté par une colonne XAr et de l'autre par la colonne XBr correspondant au même indice r.

En principe le bloc inclut à la fois la colonne XAr et la colonne XBr et ne va pas au delà; mais on peut imaginer des variantes dans lesquelles chaque bloc inclut soit la colonne précédant immédiatement XAr, soit la colonne suivant immédiatement la colonne XBr, soit les deux; on peut imaginer aussi des variantes dans lesquelles le bloc est délimité par les colonnes XAr et XBr sans inclure soit l'une soit l'autre de ces colonnes, soit même les deux. La valeur du rapport minimal de surfaces Sinf/Ssup, utilisée dans le calcul récurrent pour la détermination de SDA, dépend de la variante choisie et surtout de l'application considérée; elle peut être choisie intuitivement ou à la suite d'expérimentations réelles dans l'application. Elle a été choisie égale à 1 dans l'exemple décrit à propos de la figure 2.

La figure 5 représente la matrice de pixels du bloc de la figure 2, dans laquelle on n'a conservé que les pixels des blocs délimités par les colonnes XAr, XBr. C'est à l'intérieur de ces blocs que l'on va décider s'il y a ou non une barre de codes à barres.

La phase I, phase de segmentation de l'image en blocs à forte probabilité de présence de barre, est maintenant terminée.

Il reste cependant à préciser l'étape A de cette phase I, étape de détermination d'un seuil de départ SD pour le calcul récurrent de l'étape B. Plutôt que d'effectuer le calcul récurrent à partir de SD = 1, on préfère éliminer des étapes superflues pour lesquelles on est pratiquement certain que certains des rapports de surface Sinf/Ssup seront inférieurs à la valeur choisie.

Selon une caractéristique particulière de l'invention, on calcule, au cours d'une étape A précédant l'étape B, une valeur initiale de SD, de la manière suivante :

- on compte le nombre total de pixels dans le premier état logique binaire pour toute la matrice image: c'est la somme des valeurs de Tj pour j variant de 1 à p;
- on multiplie cette somme par un nombre K prédéterminé (qui est en pratique d'autant plus petit que le nombre p de colonnes de la matrice est plus élevé, de sorte qu'on peut écrire le nombre K sous forme K = k/p);
- et on choisit un nombre entier proche du résultat de cette multiplication, par exemple le nombre le plus proche par valeur inférieure ou par valeur supérieure; ce nombre constitue la valeur de départ SD du calcul récurrent.

Dans un exemple numérique correspondant à celui de la figure 2, le nombre p est de 16; le coefficient k choisi (en fonction de considérations intuitives ou expérimentales liées à l'application considérée) est 1/2; K est donc égal à 1/32; le nombre total de pixels à l'état logique 1 dans la matrice est 52; le résultat de la multiplication est 1,63; on choisit pour SD le nombre entier le plus proche, c'est-à-dire SD = 2.

Dans un autre exemple numérique avec une matrice de 64 lignes par 64 colonnes, dans laquelle on trouverait 550 pixels noirs, on trouverait, avec le même coefficient k = 1/2, un seuil de départ SD = 4 au dessous duquel il n'est pas nécessaire d'effectuer le calcul récurrent.

En ce qui concerne la phase II de la détection de barres, elle consiste, comme on l'a déjà évoqué, en une reconnaissance de forme destinée à vérifier si la présence de points noirs relativement nombreux, à l'intérieur des blocs sélectionnés à la phase I, correspond ou non à une barre du code.

Cette reconnaissance peut être plus ou moins sophistiquée et la sélection des zones reconnues comme étant des barres peut être plus ou moins sévère.

Dans un exemple simplifié à l'extrême , la reconnaissance peut consister seulement en une évaluation globale de la surface noire à l'intérieur de chacun des blocs sélectionnés et en une comparaison de cette surface avec une surface nominale de barre dans l'application considérée, ou avec une plage de valeurs nominales admissibles. La surface noire est évaluée par simple sommation de Tj entre les limites XAr et XBr d'un bloc.

Dans le cas de la figure 2, traitée pour aboutir à la figure 5, la surface noire dans le premier bloc entre XA1 et XB1 est égale à 22; dans le second bloc elle est de 13. On peut supposer qu'une barre est reconnue come telle si la surface est au minimum égale à 10 pixels noirs, et dans ce cas on aura reconnu deux barres dans l'image de la figure 2, les autres pixels noirs pouvant être considérés comme du bruit éliminé par le procédé de traitement de la présente invention.

Dans un exemple plus complexe de reconnaissance de formes, on peut, outre le calcul de surface noire globale dans un bloc, effectuer un calcul de hauteur de l'image noire dans le bloc si celui-ci n'occupe pas toute la hauteur du bloc et une comparaison avec une hauteur nominale de barre ou une gamme de hauteurs nominales acceptables.

De préférence ces comparaisons s'effectuent après un traitement de signal supplémentaire consistant en l'élimination, dans les blocs sélectionnés, des pixels noirs isolés, c'est-à-dire ceux qui, à l'intérieur d'un bloc n'ont pas de voisin immédiatement adjacent, sur la même ligne ou sur la même colonne (ou éventuellement aussi diagonalement). Ces pixels isolés peuvent en effet être considérés comme du bruit. Dans certains cas, on pourra même éliminer des petits groupes isolés.

On peut encore envisager de préciser les critères de reconnaissance en évaluant la position d'un barycentre de la surface de pixels noirs d'un bloc et en comparant cette position à une position nominale ou une gamme de positions nominales admissibles pour une barre du code. Le barycentre peut être défini come étant le point pour lequel la somme des carrés des distances entre ce point et chacun des points du bloc est minimale.

Dans le cas général, on pourra établir un coefficient de ressemblance qui représente en valeur relative la proximité entre les valeurs réelles et les valeurs nominales de surface, de hauteur, de position de barycentre, etc.

Dans une réalisation particulière on peut prévoir que le coefficient de ressemblance est calculé à partir d'une moyenne des écarts entre les valeurs réelles et nominales de différents paramètres parmi lesquels ceux qui ont été cités ci-dessus. Si les écarts relatifs en pourcentage sont E1, E2, E3, pour trois paramètres, le coefficient de ressemblance exprimé en pourcents pourra être

CR(%) = 100 - (E1 + E2 + E3)/3

Ce coefficient est comparé à une valeur minimale acceptable, par exemple 80%; s'il est supérieur, on fournit un signal électrique binaire dans un premier état pour indiquer qu'une barre a été reconnue dans le bloc considéré entre deux abscisses XAr et XBr; s'il est inférieur, on fournit un signal électrique dans un deuxième état pour indiquer que le bloc ne contient pas véritablement une barre de code mais des taches noires parasites.

Dans une autre variante encore, on utilise, soit pour éliminer des blocs, soit pour compléter le calcul d'un coefficient de ressemblance par un paramètre supplémentaire, soit encore pour aider au décodage du code, une mesure de la largeur des blocs entre les abscisses XAr et XBr; cette mesure est comparée à une largeur nominale ou à plusieurs largeurs nominales (si le code se fonde sur la largeur des barres), ou encore à une ou plusieurs plages de largeurs acceptables. Là encore, le coefficient de ressemblance peut être calculé à partir de la moyenne des écarts relatifs en pourcentage des différents paramètres par rapport à leurs valeurs nominales.

**Revendications**

1. Procédé de lecture optique de codes à barres, caractérisé en ce qu'il comporte la succession d'opérations suivantes:
    - a) fournir à l'aide d'un détecteur optique une représentation d'une zone contenant le code à barres, sous forme d'une matrice de pixels dans laquelle chaque pixel représente un état logique binaire caractéristique d'un point de la zone;
- b) calculer le total Tj du nombre des pixels dans un premier état logique pour chaque colonne de la matrice, j étant l'indice de colonne de la matrice;
- c) établir une valeur SDA telle que les colonnes pour lesquelles Tj est inférieur à SDA ne soient pas considérées comme contenant probablement une partie d'une barre du code à barre;
- d) déterminer, en faisant croître j, une succession d'abcisses de colonnes XA1, XA2,..., XAr, etc. pour lesquelles Tj franchit la valeur SDA dans un premier sens et une succession d'abcisses de colonnes XB1, XB2,..., XBr, etc. pour lesquelles Tj franchit la valeur SDA dans l'autre sens;
- e) délimiter dans la matrice de pixels, pour chaque indice r, un rectangle ayant pour côtés les colonnes d'abcisses XAr et XBr ou des colonnes immédiatement adjacentes;
- f) comparer, pour chaque rectangle, un paramètre de l'image globale constituée par les pixels d'un état logique déterminé contenus dans ce rectangle à un paramètre nominal théorique pour une barre de code à barres qui serait orientée essentiellement dans le sens des colonnes du rectangle;
- g) fournir un signal électrique binaire d'un premier état logique ou d'un second état logique en fonction du résultat de la comparaison, ce signal représentant la présence ou l'absence d'une barre.

2. Procédé de lecture optique selon la revendication 1, caractérisé en ce que la valeur SDA de l'étape c est déterminée par une succession d'opérations récurrentes qui sont les suivantes :
- c1) on choisit un premier nombre entier SD au moins égal à 1;
- c2) en faisant croître j, on détermine une succession de valeurs XA1, XA2,..., XAr, etc., de j pour lesquelles Tj franchit le seuil SD dans un premier sens et une succession de valeurs XB1, XB2,..., XBr, etc., pour lesquelles Tj franchit le seuil dans l'autre sens;
- c3) pour chacun des couples XAr, XBr, on calcule une valeur qui est le rapport entre la quantité (XBr-XAr).SD et la quantité qui est la sommation de [Tj - SD] pour j variant de XAr à XBr;
- c4) on compare ce rapport à un rapport minimal choisi;
- c5) on incrémente SD de une unité si l'un au moins des rapports est inférieur au rapport minimal choisi, et on recommence les étapes c2 à c5;
- c6) on arrête l'incrémentation si les rapports calculés pour chacun des couples XAr, XBr dépassent tous le rapport minimal; on mémorise les indices XAr, XBr correspondant au dernier calcul effectué, et la valeur SDA est la dernière valeur de SD utilisée dans se calcul récurrent.

3. Procédé de lecture optique selon la revendication 2, caractérisé en ce que la valeur initiale de SD choisie à l'étape c1 pour commencer le calcul récurrent est obtenue par
- calcul du nombre total de pixels dans le premier état logique binaire pour toute la matrice,
- multiplication de ce nombre par un coefficient, et choix d'un nombre entier proche du résultat pour obtenir la valeur initiale de SD.

4. Procédé de lecture optique selon l'une des revendications 1 à 3, caractérisé en ce que la détermination des couples XAr, XBr pour lesquels la somme de pixels Tj, calculée colonne par colonne, franchit le seuil SD dans un sens puis dans un autre, est la suivante:
- XAr est la valeur de j pour laquelle, en faisant croître j, Tj devient supérieur ou égal à SD alors que Tj était précédemment (pour j = XAr-1) strictement inférieur à SD;
- XBr est la première valeur de jpour laquelle, en faisant croître j depuis XAr, Tj est encore supérieur ou égal à SD, alors que pour la colonne suivante (j = XBr + 1), Tj redevient strictement inférieur à SD.

5. Procédé de lecture optique selon l'une des revendications 1 à 4, caractérisé en ce que, à l'étape f, plusieurs paramètres différents sont évalués pour l'image contenue dans chaque rectangle et sont comparés à un paramètre nominal, et en ce que le signal électrique fourni à l'étape g est fonction de l'ensemble de ces comparaisons.

6. Procédé de lecture optique selon l'une des revendications précédentes, caractérisé en ce que le paramètre évalué à l'étape f comprend l'un ou plusieurs des paramètres suivants : surface globale de l'image dans le rectangle; hauteur de cette image, largeur de cette image, position du barycentre de l'image.

**7.** Procédé de lecture optique selon l'une des revendications 1 à 5, caractérisé en ce que le paramètre évalué à l'étape f est un coefficient de ressemblance entre l'image contenue dans le rectangle et l'image théorique d'une barre de code à barres, ce coefficient étant une fonction d'une ou plusieurs des grandeurs suivantes : surface globale de l'image dans le rectangle; hauteur de cette image, largeur de cette image, position du barycentre de l'image.

**8.** Procédé de lecture selon la revendication 7, caractérisé en ce que le coefficient de ressemblance est une fonction de la moyenne des écarts entre les grandeurs considérées et des valeurs nominales de ces grandeurs.

**Claims**

**1.** A method of optically reading bar codes characterized in that it comprises the following sequence of operations:
- a) providing, by means of an optical sensor, a representation of a zone containing the bar code in the form of a matrix of pixels wherein each pixel represents a binary logic state characteristic of a point in the zone;
- b) calculating the total number Tj of pixels in a first logic state for each column in the matrix, j being the index of the column in the matrix:
- c) establishing a value SDA such that the columns for which Tj is less than SDA are not considered as columns which probably contain a part of a bar of the bar code;
- d) determining, on increasing j, a sequence of column abscissae XA1, XA2, ..., XAr, etc. at which Tj exceeds the value SDA in a first direction and a sequence of column abscissae XB1, XB2, ..., XBr, etc. at which Tj exceeds the value SDA in the other direction;
- e) defining in the pixel matrix, for each index r, a rectangle the sides of which are formed by the columns having the abscissae XAr and XBr or by the immediately adjacent columns;
- f) comparing, in the case of each rectangle, a parameter of the overall image constituted by the pixels of a predetermined logic state contained in the said rectangle to a nominal theoretical parameter for a bar of a bar code which would be orientated substantially in the direction of the columns in the rectangle;
- g) generating a binary electrical signal of a first logic state or of a second logic state depending on the result of the comparison, the said signal representing the presence or absence of a bar.

**2.** An optical reading method according to claim 1, characterized in that the value SDA of the stage c is determined by the following recurrent sequence of operations:
- c1) a first integral number SD is chosen which is at least equal to 1;
- c2) on increasing j, a sequence of values XA1, XA2, ..., XAr, etc. of j is determined at which Tj passes beyond the threshold SD in a first direction and a sequence of values XB1, XB2, ..., XBr, etc. at which Tj passes beyond the threshold in the other direction;
- c3) for each of the pairs XAr and XBr, a value is calculated which is the ratio between the quantity (XBr-XAr).SD and the quantity which is the sum of [Tj-SDj] for j changing from XAr to XBr;
- c4) this ratio is compared to a preselected minimal ratio;
- c5) SD is increased by 1 if at least one of the ratios is less than the preselected minimal ratio, and stages c2 to c5 are recommenced;
- c6) the incrementation is stopped if the ratios calculated for each of the pairs XAr and XBr all exceed the minimal ratio; the indices XAr and XBr corresponding to the last calculation performed are stored in memory and the value SDA is the last value of SD used in the recurrent calculation.

**3.** An optical reading method according to claim 2, characterized in that the initial value SD chosen at the stage c1 to commence the recurrent calculation is obtained by
- calculating the total number of pixels in the first binary logic state in all of the matrix,
- multiplying this number by a coefficient and selecting an integral number close to this result in order to obtain the initial value of SD.

**4.** An optical reading method according to any one of claims 1 to 3, characterized in that the following procedure is used to determine the pairs XAr and XBr for which the sum of pixels Tj, calculated column by column, passes through the threshold SD in one direction and then in the other:
- XAr is the value of j for which, on increasing j, Tj becomes greater than or equal to SD whereas in the preceding calculation (where j = XAr-1) Tj was definitely less than SD;

- XBr is the first value of j for which, on increasing j above XAr, Tj is still greater than or equal to SD whereas in the case of the succeeding column (j = XBr + 1) Tj again becomes definitely less than SD.

5. An optical reading method according to any one of claims 1 to 4, characterized in that, in the stage f, a plurality of different parameters are evaluated for the image contained in each rectangle and they are compared with a nominal parameter, and in that the electrical signal supplied at stage g is a function of the totality of these comparisons.

6. An optical reading method according to any one of the preceding claims, characterized in that the parameter evaluated in stage f comprises one or more of the following parameters: overall surface area of the image in the rectangle; height of the said image, width of the said image, position of the barycentre of the image.

7. An optical reading method according to any one of claims 1 to 5, characterized in that the parameter evaluated in stage f is a coefficient of resemblance between the image contained in the rectangle and the theoretical image of a bar of a bar code, this coefficient being a function of one or more of the following measurements: overall surface area of the image in the rectangle; height of the said image, width of the said image, position of the barycentre of the image.

8. A reading method according to claim 7, characterized in that the coefficient of resemblance is a function of the mean of the differences between the measurements considered and the nominal values of these measurements.

## Patentansprüche

1. Verfahren zum optischen Lesen von Strichcodes, dadurch **gekennzeichnet,** daß es die Folge folgender Arbeitsgänge umfaßt:

a) Lieferung mittels eines optischen Detektors einer Darstellung einer Zone enthaltend den Strichcode in Form einer Pixel-Matrix, in der jedes Pixel einen binären logischen Zustand darstellt, der für einen Punkt der Zone charakteristisch ist;

b) Berechnung der Gesamtsumme Tj der Zahl der Pixel in einem ersten logischen Zustand für jede Spalte der Matrix, wobei j der Spaltenindex der Matrix ist;

c) Vorsehen eines Wertes SDA, wie nicht erachtet wird, daß die Spalten, für die Tj kleiner als SDA ist, wahrscheinlich einen Teil eines Strichs des Strichcodes enthalten;

d) Bestimmung durch Zunehmenlassen von j einer Folge von Spaltenabszissen XA1, XA2, ..., XAr etc., für die Tj den Wert SDA in einer ersten Richtung überschreitet, und einer Folge von Spaltenabszissen XB1, XB2, ..., XBr, etc., für die Tj den Wert SDA in der anderen Richtung überschreitet;

e) Abgrenzung in der Pixel-Matrix eines Rechtecks, das als Seiten die Abszissenspalten XAr und XBr oder unmittelbar benachbarte Spalten aufweist, für jeden Index r;

f) Vergleichen für jedes Rechteck eines Parameters des durch die in diesem Rechteck enthaltenen Pixel mit einem bestimmten logischen Zustand gebildeten Gesamtbildes mit einem theoretischen Nominalparameter für einen Strichcode-Strich, der im wesentlichen in der Richtung der Spalten des Rechtecks orientiert ist;

g) Liefern eines binären elektrischen Signals mit einem ersten logischen Zustand oder einem zweiten logischen Zustand abhängig vom Ergebnis des Vergleichs, wobei dieses Signal das Vorhandensein oder das Fehlen eines Strichs darstellt.

2. Optisches Leseverfahren nach Anspruch 1, dadurch **gekennzeichnet,** daß der Wert SDA des Schritts c durch eine Folge von Rekursivarbeitsgängen bestimmt ist, die die folgenden sind:

c1) es wird eine erste ganze Zahl SD mindestens gleich 1 gewählt;

c2) es wird durch Zunehmenlassen von j eine Folge von Werten XA1, XA2, ..., XAr, etc. von j, für die Tj den Schwellwert SD in einer ersten Richtung überschreitet, und eine Folge von Werten XB1, XB2, ..., XBr, etc. bestimmt, für die Tj den Schwellwert in der anderen Richtung überschreitet;

c3) für jedes der Paare XAr, XBr wird ein Wert berechnet, der das Verhältnis zwischen der Größe $(XBr-XAr) \cdot SD$ und der Größe ist, die die Summierung von [Tj - SD], für j sich ändernd von XAr bis XBr, ist;

c4) Es wird dieses Verhältnis mit einem gewählten minimalen Verhältnis verglichen;

c5) Es wir SD um eine Einheit inkrementiert, wenn wenigstens eines der Verhältnisse kleiner als das gewählte minimale Verhältnis ist, und es werden die Schritte c2 bis c5 wieder begonnen;

c6) Es wird die Inkrementierung angehalten, wenn die berechneten Verhältnisse für die Paare XAr, XBr jeweils sämtlich das minimale Verhältnis überschreiten; es werden die der letzten bewirkten Berechnung entsprechenden Indizes XAr, XBr gespeichert, und der Wert SDA ist der bei dieser Rekursivberechnung verwendete Wert von SD.

3. Optisches Leseverfahren nach Anspruch 2, dadurch **gekennzeichnet,** daß der beim Schritt c1 zum Beginnen der Rekursivberechnung gewählte Anfangswert von SD erhalten wird durch
   - Berechnung der Gesamtpixelzahl im ersten binären logischen Zustand für die gesamte Matrix,
   - Multiplikation dieser Zahl mit einem Koeffizienten und Wahl einer ganzen Zahl nahe dem Ergebnis, um den Anfangswert von SD zu erhalten.

4. Optisches Leseverfahren nach einem der Ansprüche 1 bis 3, dadurch **gekennzeichnet,** daß die Bestimmung der Paare XAr, XBr für die die spaltenweise berechnete Pixelsumme Tj den Schwellwert SD in einer Richtung, dann in einer anderen überschreitet, die folgende ist:
   - XAr ist der Wert von j, für den, bei Zunehmenlassen von j, Tj größer oder gleich SD wird, während Tj zuvor (für j = XAr-1) strikt kleiner als SD war;
   - XBr ist der erste Wert von j, für den, bei Zunehmenlassen von j von XAr an, Tj noch größer oder gleich SD ist, während für die folgende Spalte (j = XBr + 1) Tj wieder strickt kleiner als SD wird.

5. Optisches Leseverfahren nach einem der Ansprüche 1 bis 4, dadurch **gekennzeichnet,** daß beim Schritt f mehrere verschiedene Parameter für das in jedem Rechteck enthaltene Bild ausgewertet werden und mit einem Nominal-parameter verglichen werden, und daß das beim Schritt g gelieferte elektrische Signal abhängig von der Gesamtheit dieser Vergleiche ist.

6. Optisches Leseverfahren nach einem der vorhergehenden Ansprüche, dadurch **gekennzeichnet,** daß der beim Schritt f ausgewertete Parameter einen oder mehrere der folgenden Parameter aufweist: Gesamtfläche des Bildes im Rechteck; Höhe dieses Bildes, Breite dieses Bildes, Position des Schwerpunktes des Bildes.

7. Optisches Leseverfahren nach einem der Ansprüche 1 bis 5, dadurch **gekennzeichnet,** daß der beim Schritt f ausgewertete Parameter ein Ähnlichkeitskoeffizient zwischen dem im Rechteck enthaltenen Bild und dem theoretischen Bild eines Strichcode-Striches ist, wobei dieser Koeffizient eine Funktion einer oder mehrerer der folgenden Größen ist: Gesamtfläche des Bildes im Rechteck; Höhe dieses Bildes, Breite dieses Bildes, Position des Schwerpunktes des Bildes.

8. Leseverfahren nach Anspruch 7, dadurch **gekennzeichnet,** daß der Ähnlichkeitskoeffizient eine Funktion des Mittelwertes der Abweichungen zwischen den betrachteten Größen und Nominalwerten dieser Größen ist.

FIG_1

P

E

l

H

10

12

14

FIG_2

1
2

F

j =  1  2  3  4  5  6  7  8  9  — — — — — — P

Tj

1 2 3 4 5 6 7 8 9 10 11 12 13 14 15 16

S sup 1

S sup 3

S sup 2

S sup 4

D
3
2
1

S inf 2

S inf 3

Sinf1

Sinf4

j

XA1 XB1   XA2   XB2   XA3  XB4 XB4

FIG_3

FIG_4

FIG_5